# EUROPEAN PATENT SPECIFICATION

(11) **EP 0 756 157 B1**
(45) Date of publication and mention of the grant of the patent: **11.02.1998**
(21) Application number: 96830396.6
(22) Date of filing: 17.07.1996
(51) Int. Cl.: G01F 1/69

(54) **Method for measuring the air flow fed to an electronic injection internal combustion engine**
Verfahren zur Ansaugluftmengenmessung einer Brennkraftmaschine mit elektronischer Einspritzung
Procédé pour la mesure du débit d'air d'un moteur à combustion interne avec injection électronique

(30) Priority: 24.07.1995 IT TO950629
(43) Date of publication of application: 29.01.1997
(73) Proprietor: C.R.F. Società Consortile per Azioni, 10043 Orbassano (TO) (IT)
(72) Inventor: Palazzetti, Mario, 10051 Avigliana (TO) (IT)
(74) Representative: Notaro, Giancarlo

(56) References cited:
- PATENT ABSTRACTS OF JAPAN vol. 004, no. 110 (P-022), 8 August 1980 & JP-A-55 066714 (NIPPON SOKEN INC), 20 May 1980,
- IBM TECHNICAL DISCLOSURE BULLETIN, vol. 33, no. 11, April 1991, NEW YORK US, page 230 XP000110377 "Hot-Wire Volumetric Flow Meter"
- PATENT ABSTRACTS OF JAPAN vol. 014, no. 183 (P-1035), 12 April 1990 & JP-A-02 031168 (NKK CORP), 1 February 1990,

## Description

The present invention relates to a method for measuring the characteristics of a fluid flow, which can be used for example for measuring the air flow fed to an internal combustion engine with electronic injection as well as for various other applications, which will be mentioned in the following.

The invention relates in particular to the field of methods for measuring the characteristics of a fluid flow, of the type in which a hot-wire anemometer is provided, comprising an electric wire which is exposed to the fluid flow and means for supplying an electric current to the wire and for measuring the characteristics of the fluid flow by indirectly determining the amount of heat transmitted by the wire to the fluid flow.

Hot wire anemometers have been used for a long time, according to various possible methods. For example, in the constant resistance method, the wire is inserted in an electric circuit which is able to keep the temperature constant while the speed of the fluid flow varies, so that this speed may be measured by determining the electric power requested to keep this condition. In the constant power method, the heating power is kept constant and the temperature variation generated in the wire is measured.

Hot wire anemometers which are presently available are able to carry out a measuring of the characteristics of the flow at a single point of the cross-section of the flow. Therefore, when anemometers of this type are used in conduits with a relatively large cross-sectional area (such as in the case of the conduit for feeding air into an internal combustion engine with electronic injection), the measuring can be considered as being reliable provided that the fluid-dynamic field throughout the whole cross-section of the fluid flow is substantially uniform. For this reason, anemometers of this type could be used in applications of the above mentioned type only if associated with devices for making the flow regular (for example of the honey-comb type) able to provide uniform characteristics to the flow or alternatively by using bulky conduits for slowing down the flow. The use of these devices, however would generate a resistance to the flow and a decrease of the engine power as well as bulk problems.

Methods as set forth in the pre-characterizing portion of Claim 1 are disclosed in IBM Technical Disclosure Bulletin, vol.33, No.11, April 1991, New York US, page 230, "Hot-Wire Volumetric Flow Meter" and in JP-A-55 066714. However, also these known methods are not able to analyze the whole fluid-dynamic field of the fluid flow accurately.

The object of the present invention is that to overcome said drawbacks.

In view of achieving this object, the invention provides a method for measuring the characteristics of a fluid flow, for example for measuring the air flow fed to an internal combustion engine with electronic injection, having the features indicated in claim 1.

By operating in the above indicated way, a reliable measuring can be carried out without resorting to any additional measure, without introducing any complication in construction and without determining a decrease of the engine power.

Naturally, the above described method can be used also in other applications, e.g. for measuring the distribution of the air flow in the various heat exchangers mounted on a motor-vehicle.

According to a further feature the invention, which can be used advantageously particularly when tuning laboratory plants, a technique similar to that used in computerized axial tomography can be used, by measuring the average value of the speed on each portion of the grating. In this case the wires must be oriented according to different directions, so that, rather than providing a rotation around the object to be detected, as in the case of computerised axial tomography, an electronic scanning can be carried out by acquiring the measures from each wire portion. Alternatively, a mixed solution can be adopted, which provides for a physical rotation of the grating in its plane through a limited angle, corresponding to the angle formed between two wire portions of the grating, in combination with an electronic scanning technique.

Simulations carried out by the applicant on a computer have shown that this system is very strong and is able to give satisfying results even in presence of a very unfavourable signal/noise ratio. The apparatus can be provided by using an acquisition system with many inputs for acquiring signals coming from the various wires forming the grating.

The arrangements of the grating can be of any type. For example, one may operate by superimposing many similar gratings upon each other, each grating having parallel and equally spaced apart wires, the wires of the gratings being rotated by a fixed angle relative to each other.

The details of construction relating to the grating, as well as the electric circuit in which the hot wire is inserted and the control electronic means which are used for carrying out the measurings are not illustrated herein, since they can be made in any known way as will be readily understood by the skilled men in the art.

Naturally, while the principle of the invention remains the same, the details of construction and the embodiments may widely vary with respect to what has been described purely by way of example, without departing from the scope of the present invention.

## Claims

1. Method for measuring the characteristics of a fluid flow, e.g. for measuring the air flow fed to an internal combustion engine with electronic injection, in which method a hot wire anemometer comprising a grating of electric wires exposed to the fluid flow and means for supplying an electric current to the grating and for measuring the electric resistance thereof, are provided characterised in that for each wire portion forming said grating a separate measuring operation is carried out, so that the whole fluid-dynamic field of the fluid flow is determined.

2. Method according to claim 1, in which the grating is formed by wired portions arranged along different directions and electronic means are provided for carrying out an electronic scanning which provides results equivalent to those of a rotation of the grating in its plane.

3. Method according to claim 2, characterised in that the grating is also caused to rotate through a limited angle, corresponding to the angle formed between two wire portions forming said grating.

## Patentansprüche

1. Verfahren zum Messen der Eigenschaften eines Fluidstroms, z.B. zum Messen des Luftstroms, der einem Verbrennungsmotor mit elektronischer Einspritzung zugeführt wird, wobei bei dem Verfahren ein Hitzdraht-Anemometer, das ein Gitter aus elektrischen Drähten umfaßt, die dem Fluidstrom ausgesetzt sind, und Einrichtungen, die dem Gitter einen elektrischen Strom zuführen und die den elektrischen Widerstand desselben messen, vorhanden sind, **dadurch gekennzeichnet,** daß für jeden Drahtabschnitt, der das Gitter bildet, ein separater Meßvorgang ausgeführt wird, so daß das gesamte fluiddynamische Feld des Fluidstroms bestimmt wird.

2. Verfahren nach Anspruch 1, wobei das Gitter durch Drahtabschnitte gebildet wird, die in unterschiedlichen Richtungen angeordnet sind, und elektronische Einrichtungen vorhanden sind, die eine elektronische Abtastung ausführen, die zu Ergebnissen führt, die denen einer Drehung des Gitters in seiner Ebene äquivalent sind.

3. Verfahren nach Anspruch 2, **dadurch gekennzeichnet**, daß das Gitter auch über einen begrenzten Winkel gedreht wird, der dem Winkel entspricht, der zwischen zwei Drahtabschnitten ausgebildet ist, die das Gitter bilden.

## Revendications

1. Procédé de mesure des caractéristiques d'un courant de fluide, par exemple destiné à la mesure d'un débit d'air transmis à un moteur à combustion interne avec injection électronique, dans lequel un anémomètre à fils chauds, comprenant un réseau de fils électriques exposés au courant de fluide, et un dispositif de transmission d'un courant électrique au réseau et de mesure de la résistance électrique de celui-ci sont incorporés, le procédé étant caractérisé en ce que, pour chaque partie de fil formant le réseau, une opération séparée de mesure est réalisée si bien que la totalité du champ dynamique du courant de fluide est déterminée.

2. Procédé selon la revendication 1, dans lequel le réseau est formé de parties de fils placées dans des directions différentes, et un dispositif électronique est destiné à assurer un balayage électronique qui donne des résultats équivalents à ceux d'une rotation du réseau dans son plan.

3. Procédé selon la revendication 2, caractérisé en ce que le réseau est aussi entraîné en rotation d'un angle limité, correspondant à l'angle formé par deux parties de fils constituant le réseau.
